# EUROPEAN PATENT APPLICATION

(11) **EP 4 424 880 A1**
(43) Date of publication of application: **04.09.2024**
(21) Application number: 22885140.8
(22) Date of filing: 20.06.2022
(51) Int. Cl.: C25B 11/097, C25B 1/04, C25B 11/057, C25B 11/031, B01J 23/42, B01J 23/44

(54) **DOUBLE-LAYER ELECTRODE FOR HYDROGEN PRODUCTION THROUGH WATER ELECTROLYSIS, PREPARATION METHOD THEREFOR AND APPLICATION THEREOF**

(30) Priority: 27.10.2021 CN 202111256317
(71) Applicant: Huaneng Clean Energy Research Institute, Beijing 102209 (CN); Sichuan Huaneng Hydrogen Energy Technology Co., Ltd., Chengdu, Sichuan 611939 (CN); Huaneng Group R&D Center Co., Ltd., Beijing 100031 (CN); Sichuan Huaneng Taipingyi Hydropower Co., Ltd., Sichuan 623003 (CN); Sichuan Huaneng Baoxinghe Hydropower Co., Ltd., Ya'an, Sichuan 625000 (CN); Sichuan Huaneng Jialing River Hydropower Co., Ltd., Nanchong, Sichuan 637000 (CN); Sichuan Huaneng Dongxiguan Hydropower Co., Ltd., Guang'an, Sichuan 638409 (CN); Sichuan Huaneng Kangding Hydropower Co., Ltd., Sichuan 626001 (CN); Sichuan Huaneng Fujiang Hydropower Co., Ltd., Mianyang, Sichuan 622500 (CN); Huaneng Mingtai Electric Power Co., Ltd., Mianyang, Sichuan 621100 (CN)
(72) Inventor: ZHANG, Chang, Beijing 102209 (CN); GUO, Haijiao, Beijing 102209 (CN); XU, Xianming, Beijing 102209 (CN); LIU, Liping, Beijing 102209 (CN); WANG, Tao, Beijing 102209 (CN); PAN, Long, Beijing 102209 (CN); WANG, Jinyi, Beijing 102209 (CN)
(74) Representative: Petraz, Gilberto Luigi
(86) International application number: PCT/CN2022/099821
(87) International publication number: WO 2023/071234

(57) **Abstract**

Disclosed in the present application are a double-layer electrode for hydrogen production through water electrolysis, a preparation method therefor and an application thereof. The double-layer electrode for hydrogen production through water electrolysis comprises a current collector. The surface of the current collector is provided with at least one hydrogen/oxygen generation porous catalyst layer. The hydrogen/oxygen generation porous catalyst layer comprises a conductive porous carrier and hydrogen/oxygen generation catalyst particles dispersed on the surface of the carrier. At least one gas impurity removal porous catalyst layer is provided on the surface of the outermost hydrogen/oxygen generation porous catalyst layer, and the gas impurity removal porous catalyst layer comprises a conductive porous carrier and gas impurity removal catalyst particles dispersed on the surface of the carrier. The double-layer electrode for hydrogen production through water electrolysis has the functions of electro-catalysis, gas diffusion and gas purification, the space of the electrolytic cell can be saved, the energy consumption is reduced, and the equipment stability under fluctuation power input is improved.

## Description

### CROSS-REFERENCE TO RELATED APPLICATION

This application claims priority to Chinese Patent Application No. 202111256317.8, entitled "DOUBLE-LAYER ELECTRODE FOR HYDROGEN PRODUCTION THROUGH WATER ELECTROLYSIS, PREPARATION METHOD THEREFOR AND APPLICATION THEREOF," filed with the China National Intellectual Property Administration on October 27, 2021, the entire content of which is incorporated herein by reference.

### FIELD

The present disclosure belongs to the technical field of hydrogen energy, and more particularly to a double-layer electrode for hydrogen production by water electrolysis, a production method therefor, and an application thereof.

### BACKGROUND

Using renewable energy power generation to produce hydrogen by water electrolysis is a green and clean hydrogen production mode, which is a mainstream technical choice for a development of hydrogen energy industry in the future. At present, main problems of a hydrogen production technology by water electrolysis are that energy consumption per hydrogen production is too high and adaptability to fluctuating renewable energy sources is poor.

An electrode for hydrogen production by water electrolysis is a place where an electrochemical reaction occurs, which plays a decisive role in the energy consumption of hydrogen production and fluctuation adaptability. At present, the electrode for hydrogen production by water electrolysis generally consists of a current collector and an electrode catalytic layer. The current collector is a conductive material with a certain strength, and the catalytic layer is particles with catalytic activity, which is loaded on a surface of the current collector by coating, deposition and the like. In a process of loading the catalytic layer, agglomeration of the particles is often accompanied, resulting in a loss of active sites and mass transfer resistance, leading to the increase of power consumption. In a process of gas generation, impact of bubbles on the catalytic layer may cause the catalytic layer to fall off, especially under a condition of input of fluctuating renewable energy sources, and instability of gas production increases, which may cause the catalytic layer to fall off and the loss of the active site. In addition, the gas forms a gas resistance between the electrode and a diaphragm, resulting in an increase in the power consumption.

Under the input of fluctuating renewable energy sources, the instability of gas production and purity increases, and a higher need is provided for a gas barrier effect of the diaphragm in terms of safety. At present, when operating at a 30% low load, an amount of hydrogen impurities in oxygen produced by an electrolyzer may be increased to 5 to 10 times of that when operating at a full load. In order to meet needs of fluctuating working conditions, the mixing of product gas produced in the electrolyzer passing through the diaphragm needs to be controlled. The gas barrier effect of the diaphragm is generally proportional to a thickness of the diaphragm. However, increasing the thickness of the diaphragm may increase the resistance of the diaphragm, improve overall power consumption, and also lead to an increase in a volume of the electrolyzer, especially in large-scale electrolyzers, which is not conducive to a large-scale development of a device for the hydrogen production by electrolysis.

### SUMMARY

In view of this, a first object of the present disclosure is to provide a double-layer electrode for hydrogen production by water electrolysis. Since a carrier hydrogen/oxygen generating porous catalytic layer with a conductive porous carrier framework and a gas impurity removal porous catalytic layer with a conductive porous carrier framework are arranged sequentially on a current collector, the whole electrode has functions of electrocatalysis, gas diffusion and gas purification, a space of an electrolyzer may be saved, energy consumption is reduced and stability of a device under fluctuating power input is improved.

A second object of the present disclosure is to provide a method for producing a double-layer electrode for hydrogen production by water electrolysis.

A third object of the present disclosure is to provide another method for producing a double-layer electrode for hydrogen production by water electrolysis.

A fourth object of the present disclosure is to provide an electrolytic hydrogen production unit.

A fifth object of the present disclosure is to provide a system for hydrogen production by water electrolysis.

In order to achieve the above-mentioned object, a first aspect of embodiments of the present disclosure provides a double-layer electrode for hydrogen production by water electrolysis. The electrode includes a current collector. A surface of the current collector is provided with at least one hydrogen/oxygen generating porous catalytic layer, and the hydrogen/oxygen generating porous catalytic layer includes a conductive porous carrier and hydrogen/oxygen generating catalyst particles dispersed on a surface of the carrier. At least one gas impurity removal porous catalytic layer is provided on a surface of an outermost hydrogen/oxygen generating porous catalytic layer, and the gas impurity removal porous catalytic layer includes a conductive porous carrier and gas impurity removal catalyst particles dispersed on a surface of the carrier.

In addition, the double-layer electrode for hydrogen production by water electrolysis provided in the above-mentioned embodiment of the present disclosure may also have additional technical features as follows.

In an embodiment of the present disclosure, when a number of hydrogen/oxygen generating porous catalytic layers is two or more, catalyst loadings and porosities of the hydrogen/oxygen generating porous catalytic layers decrease sequentially from a direction close to the current collector to a direction close to the gas impurity removal porous catalytic layer.

In an embodiment of the present disclosure, when a number of gas impurity removal porous catalytic layers is two or more, catalyst loadings of the gas impurity removal porous catalytic layers increase sequentially from a direction close to the hydrogen/oxygen generating porous catalytic layer to a direction away from the hydrogen/oxygen generating porous catalytic layer, and porosities of the gas impurity removal porous catalytic layers decrease sequentially from the direction close to the hydrogen/oxygen generating porous catalytic layer to the direction away from the hydrogen/oxygen generating porous catalytic layer.

In an embodiment of the present disclosure, the porosity of the gas impurity removal porous catalytic layer is lower than the porosity of the hydrogen/oxygen generating porous catalytic layer.

In an embodiment of the present disclosure, the hydrogen/oxygen generating porous catalytic layer has a porosity ranging from 1000 to 2000mm³/g, and an average pore diameter ranging from 10 to 20 nanometers.

In an embodiment of the present disclosure, the gas impurity removal porous catalytic layer has a porosity ranging from 500 to 1500mm³/g, and an average pore diameter ranging from 2 to 8 nanometers.

In an embodiment of the present disclosure, a catalyst loading of the hydrogen/oxygen generating porous catalytic layer is between 3 and 15wt%, and a catalyst loading of the gas impurity removal porous catalytic layer is between 1 and 8wt%.

In an embodiment of the present disclosure, a surface contact angle of the gas impurity removal porous catalytic layer is 100 to 150 degrees.

In an embodiment of the present disclosure, the current collector is flat.

In an embodiment of the present disclosure, the conductive porous carriers of the hydrogen/oxygen generating porous catalytic layer and the gas impurity removal porous catalytic layer are both three-dimensional graphene aerogels or conductive two-dimensional metal-organic framework MOF materials.

In an embodiment of the present disclosure, the hydrogen/oxygen generating catalyst particles are Ni-Fe bimetallic particles, and the gas impurity removal catalyst particles are Pt-Pd nanoparticles.

A second aspect of embodiments of the present disclosure provides a method for producing a double-layer electrode for hydrogen production by water electrolysis as described above. The method includes loading hydrogen/oxygen generating catalyst particles on a conductive porous carrier of a hydrogen/oxygen generating porous catalytic layer to form the hydrogen/oxygen generating porous catalytic layer, loading gas impurity removal catalyst particles on a conductive porous carrier of a gas impurity removal porous catalytic layer to form the gas impurity removal porous catalytic layer, and assembling the hydrogen/oxygen generating porous catalytic layer, a current collector and the gas impurity removal porous catalytic layer.

In an embodiment of the present disclosure, the production method further includes preparing the conductive porous carrier of the hydrogen/oxygen generating porous catalytic layer and/or the conductive porous carrier of the gas impurity removal porous catalytic layer.

The three-dimensional graphene aerogels are taken as an example of the conductive porous carrier of the hydrogen/oxygen generating porous catalytic layer. The three-dimensional graphene aerogels were prepared by a hydrothermal method, a freeze-drying method and a thermal reduction method, specifically as follows.

Graphene oxide and ascorbic acid were blended in water, fully dispersed, then a mixed solution was placed in a glass bottle with a piston, after sealing, the mixed solution was reacted at 80°C for 3 to 4h. In a graphene oxide dispersion liquid, a mass fraction of the graphene oxide was 1 to 3%, and a mass ratio of the graphene oxide to the ascorbic acid was 1: 2-3. The mixed solution accounts for 1/4 to 1/3 of a total volume of the glass bottle. Subsequently, an obtained graphene oxide hydrogel was washed with water for 3 to 5 times, dried with liquid nitrogen for 10 to 15 minutes, and then placed into a freeze dryer for freeze-drying for 12h. Finally, a freeze-dried graphene oxide aerogel was placed in a tube furnace, heated to 1000 to 1300°C under a reducing atmosphere of 5 to 10% H₂/N₂, and kept for 2h to obtain a reduced graphene oxide aerogel.

It is to be noted that when the three-dimensional graphene aerogels are taken as the conductive carrier of the gas impurity removal porous catalytic layer, the production method thereof is similar to that of the three-dimensional graphene aerogels being the conductive porous carrier of the hydrogen/oxygen generating porous catalytic layer, but a mass fraction of the graphene oxide is 1.5 to 3 times that of the former.

In an embodiment of the present disclosure, in the above-mentioned production method, when a number of the hydrogen/oxygen generating porous catalytic layers or the gas impurity removal porous catalytic layers is two or more, a new hydrogen/oxygen generating porous catalytic layer or gas impurity removal porous catalytic layer is prepared by repeatedly forming a hydrogen/oxygen generating porous catalytic layer or a gas impurity removal porous catalytic layer on a previously prepared hydrogen/oxygen generating porous catalytic layer or gas impurity removal porous catalytic layer as a base.

A third aspect of embodiments of the present disclosure provides a method for producing a double-layer electrode for hydrogen production by water electrolysis as described above. The method includes forming a hydrogen/oxygen generating porous catalytic layer carrier on a current collector, and loading hydrogen/oxygen generating porous catalytic layer nanoparticles on a conductive porous carrier of the hydrogen/oxygen generating porous catalytic layer carrier to obtain a hydrogen/oxygen generating porous catalytic layer - current collector complex, forming, on the hydrogen/oxygen generating porous catalytic layer - current collector complex as a base, a conductive porous carrier of a gas impurity removal porous catalytic layer on a surface of the hydrogen/oxygen generating porous catalytic layer of the hydrogen/oxygen generating porous catalytic layer - current collector complex, and loading gas impurity removal porous catalytic layer nanoparticles on the conductive porous carrier of the gas impurity removal porous catalytic layer.

In an embodiment of the present disclosure, the method further includes preparing the conductive porous carrier of the hydrogen/oxygen generating porous catalytic layer and/or the conductive porous carrier of the gas impurity removal porous catalytic layer.

The conductive two-dimensional metal-organic framework MOF material Cu-BHT (benzenehexathiol) is taken as an example of the conductive porous carrier of the hydrogen/oxygen generating porous catalytic layer, and the production method thereof is as follows.

Firstly, under an argon atmosphere, BHT was dissolved in dichloromethane at a BHT concentration of 0.24mM. Secondly, the current collector was fixed on a bracket inside a reaction vessel with a sealed plug, and a part of the BHT solution was added into a sealed bottle. A surface of the solution was immersed over the current collector about 10mm. Then, the solution was covered with equal volume of water to form an oil-water interface. Finally, a mixed aqueous solution of Cu(NO₃)₂ (5mM) and NaBr (1mM) was slowly added into the water to react for 1 to 2h, so that a conductive MOF film was formed on a solution interface.

In an embodiment of the present disclosure, in the above-mentioned method, when a number of the hydrogen/oxygen generating porous catalytic layers or the gas impurity removal porous catalytic layers is two or more, a new hydrogen/oxygen generating porous catalytic layer or gas impurity removal porous catalytic layer is prepared by repeatedly forming a hydrogen/oxygen generating porous catalytic layer or a gas impurity removal porous catalytic layer on a previously prepared hydrogen/oxygen generating porous catalytic layer or gas impurity removal porous catalytic layer as a base.

A fourth aspect of embodiments of the present disclosure provides an electrolytic hydrogen production unit. The electrolytic hydrogen production unit includes a diaphragm. A cathode double-layer electrode is disposed at one side of the diaphragm, and an anode double-layer electrode is disposed at the other side of the diaphragm. The cathode double-layer electrode and the anode double-layer electrode are both a double-layer electrode for hydrogen production by water electrolysis as described above, and a gas impurity removal porous catalytic layer of the cathode double-layer electrode and a gas impurity removal porous catalytic layer of the anode double-layer electrode are both adjacent to the diaphragm.

A fifth aspect of embodiments of the present disclosure provides a system for hydrogen production by water electrolysis. The system includes a double-layer electrode for hydrogen production by water electrolysis as described above.

The double-layer electrode for hydrogen production by water electrolysis provided in the embodiments of the present disclosure has beneficial effects as follows. The electrode has functions of electrocatalysis, gas diffusion and gas purification at the same time, a space of an electrolyzer may be saved, energy consumption is reduced and performance stability under fluctuating working conditions is improved.
(1) The hydrogen/oxygen generating catalytic layer and the gas impurity removal catalytic layer of the double-layer electrode both adopt conductive framework materials, which increases the electronic conductivity.
(2) The hydrogen/oxygen generating porous catalytic layer of the double-layer electrode has a three-dimensional porous structure, which provides rich specific surface area for electrocatalyst, increases a utilization rate of active sites, and may exert better catalytic efficiency under a same metal dosage.
(3) A mesoporous structure of the hydrogen/oxygen generating catalytic layer provides good conditions for gas diffusion, which may lead generated gas out of a system in time, so that the gas is prevented from impacting the catalytic layer and additional resistance caused by gas retention is prevented.
(4) The gas impurity removal catalytic layer may promote a small amount of impurity gas passing through the diaphragm to react with product gas to generate water, thus avoiding the risk of explosion. Abundant surface active sites are able to adapt to a mixing amount of the impurity gas passing through the diaphragm under different power input, and needs for a thickness of the diaphragm is reduced. A thinner diaphragm may be used, thus reducing the resistance of the diaphragm, improving the compactness of the electrolyzer and being conducive to large-scale development of a device for the hydrogen production by electrolysis.
(5) The gas impurity removal catalytic layer has a suitable surface hydrophobicity, which is beneficial to the removal of impurity removal reaction products and improves the efficiency of impurity removal reaction while maintaining the wettability of electrolyte and ensuring the ion conductivity.
(6) A gradient catalyst loading and porosity distribution of the double-layer electrode are conducive to making full use of the active sites of the catalyst, and conducive to the diffusion and extraction of gas on an electrode side and the enhancement of gas barrier effect on a diaphragm side.
(7) A purification unit of an auxiliary system for hydrogen production by electrolysis may be omitted by using the double-layer electrode, thus simplifying the system and reducing overall investment.

Compared with the prior art, advantages of the electrolytic hydrogen production unit and the system for hydrogen production by water electrolysis provided in the embodiments of the present disclosure are basically the same as those in the double-layer electrode for hydrogen production by water electrolysis provided in the embodiments of the present disclosure, which will not be elaborated herein.

The method for producing the double-layer electrode for hydrogen production by water electrolysis in the embodiments of the present disclosure has simple process and is convenient to operate.

Additional aspects and advantages of the present disclosure will be set forth, in part, in the following description, and in part will be apparent from the following description, or learned by practice of the present disclosure.

### BRIEF DESCRIPTION OF THE DRAWINGS

The above-mentioned and/or additional aspects and advantages of the present disclosure will be apparent and readily understood from the following description of embodiments taken in conjunction with the accompanying drawings.
FIG. 1 is a schematic diagram of a simple main view structure of a double-layer electrode for hydrogen production by water electrolysis in Example 1 of the present disclosure.
FIG. 2 is a schematic diagram of a simple longitudinal cross-sectional structure of a double-layer electrode for hydrogen production by water electrolysis in Example 3 of the present disclosure.
FIG. 3 is a schematic diagram of a simple main view structure of an electrolytic hydrogen production unit in Example 2 of the present disclosure.

### Reference numeral:

Current collector 1; Hydrogen/oxygen generating porous catalytic layer 2; Gas impurity removal porous catalytic layer 3; Diaphragm 100; Cathode double-layer electrode 200; Anode double layer electricity 300.

### DETAILED DESCRIPTION

Embodiments of the present disclosure are described in detail below, examples of which are illustrated in the accompanying drawings. The embodiments described below with reference to the accompanying drawings are illustrative, and are intended to explain the present disclosure and cannot be construed as limiting the present disclosure.

Unless defined otherwise, technical terms used in the following examples have the same meaning as commonly understood by one of ordinary skill in the art to which the present disclosure pertains. Unless specified otherwise, test reagents used in the following examples are all conventional biochemical reagents. Unless specified otherwise, experimental methods are all conventional methods.

### Example 1

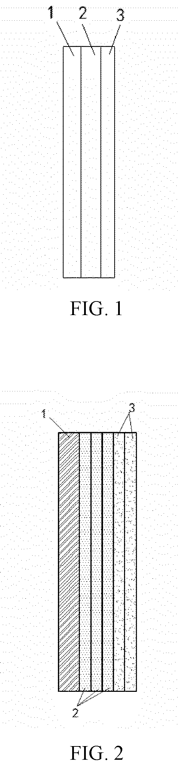

As shown in FIG. 1, a double-layer electrode for hydrogen production by water electrolysis includes a current collector 1. A surface of the current collector 1 is provided with one hydrogen/oxygen generating porous catalytic layer 2, and the hydrogen/oxygen generating porous catalytic layer 2 includes a conductive porous carrier and hydrogen/oxygen generating catalyst particles dispersed on a surface of the carrier. One gas impurity removal porous catalytic layer 3 is provided on a surface of an outermost hydrogen/oxygen generating porous catalytic layer, and the gas impurity removal porous catalytic layer 3 includes a conductive porous carrier and gas impurity removal catalyst particles dispersed on a surface of the carrier. The current collector is a flat stainless steel plate. The current collector, the hydrogen/oxygen generating porous catalytic layer and the gas impurity removal porous catalytic layer are assembled together by hot pressing. The conductive porous carrier of the hydrogen/oxygen generating porous catalytic layer is a three-dimensional graphene aerogel, the hydrogen/oxygen generating catalyst particles are Ni-Fe bimetallic particles, and a loading of the Ni-Fe bimetallic particles is 10wt%. The hydrogen/oxygen generating porous catalytic layer has a porosity ranging from 1800 to 2000mm³/g and an average pore diameter ranging from 10 to 20 nanometers. A thickness of the hydrogen/oxygen generating porous catalytic layer is 1.3cm, and a thickness of the gas impurity removal porous catalytic layer is 0.8cm. The conductive porous carrier of the gas impurity removal porous catalytic layer is a three-dimensional graphene aerogel, the gas impurity removal catalyst particles are Pt-Pd nanoparticles, and a loading of the Pt-Pd nanoparticles is 3wt%. The gas impurity removal porous catalytic layer has a porosity ranging from 1300 to 1500mm³/g, and an average pore diameter ranging from 3 to 5 nanometers. A surface contact angle of the gas impurity removal porous catalytic layer is 135 degrees.

A method for producing a double-layer electrode for hydrogen production by water electrolysis in this example is as follows.
(1) The three-dimensional graphene aerogels being the conductive porous carrier of the hydrogen/oxygen generating porous catalytic layer were produced.
   A method for producing the three-dimensional graphene aerogels combines a hydrothermal method, a freeze-drying method and a thermal reduction method, specifically as follows.
   1) Graphene oxide and ascorbic acid were blended in water, fully dispersed, then a mixed solution was placed in a glass bottle with a piston, after sealing, the mixed solution was reacted at 80°C for 3.5h. In a graphene oxide dispersion liquid, a mass fraction of the graphene oxide was 2%, and a mass ratio of the graphene oxide to the ascorbic acid was 1: 2.5. The mixed solution accounted for 1/3 of a total volume of the glass bottle.
   2) An obtained graphene oxide hydrogel was washed with water for 4 times, dried with liquid nitrogen for 12 minutes, and then placed into a freeze dryer for freeze-drying for 12h.
   3) A freeze-dried graphene oxide aerogel was placed in a tube furnace, heated to 1000 to 1300°C under a reducing atmosphere of 5 to 10% H₂/N₂, and kept for 2h to obtain a reduced graphene oxide aerogel.
(2) The Ni-Fe bimetallic particles were loaded on the three-dimensional graphene aerogels being the conductive porous carrier of the hydrogen/oxygen generating porous catalytic layer to form the hydrogen/oxygen generating porous catalytic layer.

A method for loading the Ni-Fe bimetallic particles is as follows.

A mixed solution of nickel nitrate, ferric nitrate and urea was added into a sealed reaction kettle filled with the graphene aerogels, and the graphene aerogels were immersed in the solution. A total molar concentration of nickel nitrate and ferric nitrate was 0.9mol/L, a molar ratio of nickel to ferric was 1: 1, a molar concentration of urea was 0.6mol/L, and the solvent was a mixed solvent of water and ethanol with a volume ratio of 1: 1. This system was reacted at 120°C for 24h, then cooled to room temperature (25°C), and prepared products were washed with water and ethanol for three times, and further dried at 120°C for 12h. Then, obtained graphene aerogels were heated to 300°C in a tube furnace under a hydrogen reducing atmosphere, kept for 20min, and deposited oxide nanoparticles were reduced to Ni-Fe bimetallic nanoparticles.

(3) Three-dimensional graphene aerogels being the conductive porous carrier of the gas impurity removal porous catalytic layer were produced.

A method for producing the three-dimensional graphene aerogels being the conductive porous carrier of the gas impurity removal porous catalytic layer is similar to the method for producing the three-dimensional graphene aerogels being the conductive porous carrier of the hydrogen/oxygen generating porous catalytic layer, excepting that a mass fraction of graphene oxide is twice that of the former.

(4) The Pt-Pd nanoparticles were loaded on the three-dimensional graphene aerogels being the conductive porous carrier of the gas impurity removal porous catalytic layer to form the gas impurity removal porous catalytic layer.

A method for loading the Pt-Pd nanoparticles is as follows.

A mixed solution of platinum nitrate, palladium nitrate and urea was added into a sealed reaction kettle filled with the graphene aerogels, and the graphene aerogels were immersed in the solution. A total molar concentration of metal nitrate (i.e., platinum nitrate and palladium nitrate) was 0.9mol/L, a molar ratio of metal platinum to palladium was 1: 1, a molar concentration of urea was 0.6mol/L, and the solvent was a mixed solvent of water and ethanol with a volume ratio of 1: 1. This system was reacted at 120°C for 24h, then cooled to room temperature (25°C), and prepared products were washed with water and ethanol for three times, and further dried at 120°C for 12h. Then, obtained graphene aerogels were heated to 300°C in a tube furnace under a hydrogen reducing atmosphere, kept for 20min, and deposited oxide nanoparticles were reduced to Pt-Pd bimetallic nanoparticles.

(5) An obtained double-layer electrode for hydrogen production by water electrolysis was assembled.

An obtained hydrogen/oxygen generating porous catalytic layer, gas impurity removal porous catalytic layer and current collector were assembled together by hot pressing to form the double-layer electrode.

It is to be noted that in a production process of the double-layer electrode in this example, the size and the thickness of the catalytic layer may be controlled by adjusting a size of the glass bottle and a volume of the graphene oxide dispersion. The thickness of the hydrogen/oxygen generating porous catalytic layer ranges from 1 to 1.5cm, and the thickness of the gas impurity removal porous catalytic layer ranges from 0.6 to 1cm. The porosity of the catalytic layer may be controlled by adjusting a concentration of the graphene oxide dispersion liquid, so that the porosity of the hydrogen/oxygen generating porous catalytic layer ranges from 1000 to 2000mm³/g, and the porosity of the gas impurity removal porous catalytic layer ranges from 500 to 1500mm³/g.

### Example 2

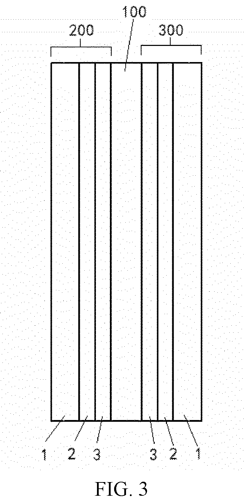

As shown in FIG. 3, an electrolytic hydrogen production unit includes a diaphragm 100, a cathode double-layer electrode 200 and an anode double-layer electrode 300, which are sealed and fixedly connected together by gaskets and bolts. The cathode double-layer electrode 200 and the anode double-layer electrode 300 are both a double-layer electrode for hydrogen production by water electrolysis in Example 1. A gas impurity removal porous catalytic layer of the cathode double-layer electrode 200 is adjacent to the diaphragm, and a gas impurity removal porous catalytic layer of the anode double-layer electrode 300 is adjacent to the diaphragm. A thickness of the diaphragm is 100 microns.

When the electrolytic hydrogen production unit in this example is used in a system for hydrogen production by water electrolysis, a system for hydrogen production by water electrolysis in this example of the present disclosure may be obtained.

### Example 3

An electrolytic hydrogen production unit in this example is basically the same as that of Example 2, except that a thickness of the diaphragm is 50 microns.

### Comparative Example 1

An electrolytic hydrogen production unit in this Comparative Example is a common electrolytic unit. An electrode is a stainless steel plate loaded with Ni-Fe bimetallic oxide, and a loading of the Ni-Fe bimetallic oxide is the same as that of Example 2. An electrolyte is 30wt% of KOH aqueous solution. Athickness of a diaphragm is 100 microns.

Performances of the electrolytic hydrogen production units in Comparative Example 1, Example 2 and Example 3 were compared, and results are shown in Table 1.

**Table 1. Comparison of performance of electrolytic hydrogen production units**

| Item | Comparative Example 1 | Example 2 | Example 3 |
|---|---|---|---|
| Hydrogen purity (hydrogen in oxygen, %) | 0.92 | 0.11 | 0.12 |
| Oxygen purity (oxygen in hydrogen, %) | 0.21 | 0.08 | 0.09 |
| Electrolysis voltage (V) | 1.90 | 1.83 | 1.75 |

It may be seen from Table 1 that three-dimensional electrocatalytic interfaces and gas impurity removal functional layers of the double-layer electrodes in Examples 2 and 3 may reduce energy consumption of gas production and improve gas purity. Furthermore, the thickness of the diaphragm of the electrolyzer may be further reduced, thus reducing the resistance of the device and achieving higher gas purity.

The influence of low power load on gas purity was studied for Example 3, and results are shown in Table 2.

**Table 2. Gas Purity at Low Power Load**

| Power load, % | 20 | 30 | 40 |
|---|---|---|---|
| Hydrogen purity (hydrogen in oxygen, %) | 0.13 | 0.13 | 0.13 |
| Oxygen purity (oxygen in hydrogen, %) | 0.10 | 0.10 | 0.09 |

It may be seen from Table 2 that the gas impurity removal porous catalytic layer of the double-layer electrode may provide sufficient active sites, and may still maintain high gas production purity at low power loads.

### Example 4

A double-layer electrode for hydrogen production by water electrolysis is basically the same as that in Example 1, excepting that conductive porous carriers of the hydrogen/oxygen generating porous catalytic layer and the gas impurity removal porous catalytic layer are both conductive two-dimensional metal-organic framework MOF material Cu-BHT (benzenehexathiol). A thickness of the hydrogen/oxygen generating porous catalytic layer ranges from 200 to 400nm, and a thickness of the gas impurity removal porous catalytic layer ranges from 10 to 100nm. Porosity of the hydrogen/oxygen generating porous catalytic layer ranges from 1300 to 1500mm³/g, and a catalyst loading of the hydrogen/oxygen generating porous catalytic layer is 8wt%. Porosity of the gas impurity removal porous catalytic layer ranges from 600 to 800mm³/g, and a catalyst loading of the gas impurity removal porous catalytic layer is 4wt%. The current collector is a flat titanium plate. Two adjacent layers of the current collector, the hydrogen/oxygen generating porous catalytic layer and the gas impurity removal porous catalytic layer are combined together by chemical deposition. A surface contact angle of the gas impurity removal porous catalytic layer is 140 degrees.

A method for producing the double-layer electrode for hydrogen production by water electrolysis in this example is as follows.
(1) Conductive two-dimensional metal-organic framework MOF material Cu-BHT (benzenehexathiol) of the hydrogen/oxygen generating porous catalytic layer was prepared.

A method for producing the conductive two-dimensional metal-organic framework MOF material Cu-BHT (benzenehexathiol) is as follows.

Under an argon atmosphere, BHT was dissolved in dichloromethane at a BHT concentration of 0.24mM. The current collector was fixed on a bracket inside a reaction vessel with a sealed plug. A part of the BHT solution was added into a sealed bottle, so that a surface of the solution was immersed over the current collector about 10mm. Subsequently, the solution was covered with equal volume of water to form an oil-water interface. Then, a mixed aqueous solution of Cu(NO₃)₂ (5mM) and NaBr (1mM) was slowly added into the water to react for 1.5h, so that a conductive MOF film was formed on a solution interface.

(2) A conductive porous carrier - current collector complex of the hydrogen/oxygen generating porous catalytic layer is formed.

The solution was withdrawn from the reaction vessel with a syringe, allowing the conductive MOF film to be deposited on the current collector. Subsequently, it was dried for 12h under vacuum conditions to make the current collector fully contact with the film, and the conductive porous carrier - current collector complex of the hydrogen/oxygen generating porous catalytic layer was obtained.

(3) Ni-Fe bimetallic particles of the hydrogen/oxygen generating porous catalytic layer are loaded on the conductive porous carrier of the conductive porous carrier - current collector complex of the hydrogen/oxygen generating porous catalytic layer to form the hydrogen/oxygen generating porous catalytic layer - current collector complex.

A method for loading the Ni-Fe bimetallic particles is as follows.

A mixed solution containing nickel nitrate, ferric nitrate, anhydrous ethanol, hydrochloric acid (a mass fraction of hydrogen chloride is 37%) and water was prepared with a molar ratio of 1:1:15:5:0.02, mixed and stirred uniformly, fully impregnated on a surface of the conductive MOF carrier, and then heated in an oven of 120 degree for 14h (as long as a heating time here is 12h or more), so as to obtain the hydrogen/oxygen generating porous catalytic layer - current collector complex.

(4) The hydrogen/oxygen generating porous catalytic layer - current collector complex was taken as a base, and a conductive two-dimensional MOF material Cu-BHT (benzenehexathiol) of the gas impurity removal porous catalytic layer was prepared on a surface of the hydrogen/oxygen generating porous catalytic layer of the hydrogen/oxygen generating porous catalytic layer - current collector complex, so as to form a conductive porous carrier of the gas impurity removal porous catalytic layer-hydrogen/oxygen generating porous catalytic layer - current collector complex.

In this step, the synthesis method of the conductive two-dimensional MOF material Cu-BHT (benzenehexathiol) of the gas impurity removal porous catalytic layer is similar to the synthesis method in the hydrogen/oxygen generating porous catalytic layer, excepting that a base is a current collector loaded with the hydrogen/oxygen generating porous catalytic layer. A direction of the hydrogen/oxygen generating porous catalytic layer in the reaction vessel is upward, so that a formed MOF film is deposited on the hydrogen/oxygen generating porous catalytic layer. In this step, a reaction time is shorter than the former, which is 1h. Concentrations of copper nitrate and sodium bromide are greater than the former, and are 7mM and 3mM, respectively.

(4) Pt-Pd nanoparticles being the catalyst particles of the gas impurity removal porous catalytic layer were loaded on the conductive porous carrier of the gas impurity removal porous catalytic layer of the conductive porous carrier of the gas impurity removal porous catalytic layer-hydrogen/oxygen generating porous catalytic layer - current collector complex, so as to obtain the double-layer electrode for hydrogen production by water electrolysis.

A method for loading the Pt-Pd nanoparticles is as follows.

A mixed solution containing platinum nitrate, nickel nitrate, anhydrous ethanol, hydrochloric acid (a mass fraction of hydrogen chloride is 37%) and water was prepared with a molar ratio of platinum nitrate, nickel nitrate, anhydrous ethanol, hydrochloric acid and water of 1: 1: 15: 5: 0.02, mixed and stirred uniformly, fully impregnated on a surface of the conductive MOF carrier, and then heated in an oven of 120 degree for 13h (as long as a heating time here is 12h or more).

It is to be noted that in a whole production process, the size and the thickness of the catalytic layer may be controlled by adjusting a size of the reaction vessel and an interface reaction time. The porosity of the catalytic layer may be controlled by adjusting the concentrations of copper nitrate and sodium bromide, so that the porosity of the hydrogen/oxygen generating porous catalytic layer ranges from 1000 to 2000mm³/g, and the porosity of the gas impurity removal porous catalytic layer ranges from 500 to 1500mm³/g.

### Example 5

An electrolytic hydrogen production unit is basically the same as that in Example 2, excepting that the cathode double-layer electrode 200 and the anode double-layer electrode 300 are both the double-layer electrode for hydrogen production by water electrolysis in Example 4.

### Example 6

An electrolytic hydrogen production unit in this Example is basically the same as that in Example 5, excepting that a thickness of the diaphragm is 50 microns.

### Comparative Example 2

An electrolytic hydrogen production unit in this Comparative Example is a common electrolytic unit. An electrode is a titanium plate loaded with Ni-Fe bimetallic oxide, and a loading of Ni-Fe bimetallic oxide is the same as that in Example 4. An electrolyte is pure water. A thickness of the diaphragm is 100 microns.

Performances of the electrolytic hydrogen production units in Comparative Example 2, Example 5 and Example 6 were compared, and results are shown in Table 3.

**Table 3. Comparison of performances of electrolytic hydrogen production units**

| Item | Comparative Example 2 | Example 5 | Example 6 |
|---|---|---|---|
| Hydrogen purity (hydrogen in oxygen, %) | 0.63 | 0.12 | 0.14 |
| Oxygen purity (oxygen in hydrogen, %) | 0.18 | 0.08 | 0.09 |
| Electrolysis voltage (V) | 1.90 | 1.81 | 1.74 |

It may be seen from Table 3 that three-dimensional electrocatalytic interfaces and gas impurity removal functional layers of the double-layer electrodes in Examples 5 and 6 may reduce energy consumption of gas production and improve gas purity. Furthermore, the thickness of the diaphragm of the electrolyzer may be further reduced, thus reducing the resistance of the device and achieving higher gas purity.

The influence of low power loads on gas purity was studied for Example 6, and results are shown in Table 4.

**Table 4. Gas Purity at Low Power Loads**

| Power load, % | 20 | 30 | 40 |
|---|---|---|---|
| Hydrogen purity (hydrogen in oxygen, %) | 0.14 | 0.14 | 0.14 |
| Oxygen purity (oxygen in hydrogen, %) | 0.09 | 0.09 | 0.09 |

It may be seen from Table 4 that the gas impurity removal porous catalytic layer of the double-layer electrode may provide sufficient active sites, and may still maintain high gas production purity at low power load.

### Example 7

As shown in FIG. 2, a double-layer electrode for hydrogen production by water electrolysis is basically the same as that in Example 4, excepting that a surface of the current collector is provided with three hydrogen/oxygen generating porous catalytic layers, and two gas impurity removal porous catalytic layers are provided on a surface of an outermost hydrogen/oxygen generating porous catalytic layer. Catalyst loadings and porosities of the hydrogen/oxygen generating porous catalytic layers decrease sequentially from a direction close to the current collector to a direction close to the gas impurity removal porous catalytic layer. The catalyst loadings of the three hydrogen/oxygen generating porous catalytic layers from the direction close to the current collector to the direction close to the gas impurity removal porous catalytic layer are 10wt%, 8wt% and 6wt%, respectively. The porosities of the three hydrogen/oxygen generating porous catalytic layers from the direction close to the current collector to the direction close to the gas impurity removal porous catalytic layer are 2000mm³/g, 1500mm³/g and 1000mm³/g, respectively. Catalyst loadings of the gas impurity removal porous catalytic layers increase sequentially from a direction close to the hydrogen/oxygen generating porous catalytic layer to a direction away from the hydrogen/oxygen generating porous catalytic layer, and porosities of the gas impurity removal porous catalytic layers decrease sequentially from the direction close to the hydrogen/oxygen generating porous catalytic layer to the direction away from the hydrogen/oxygen generating porous catalytic layer. The catalyst loadings of the two gas impurity removal porous catalytic layers from the direction close to the hydrogen/oxygen generating porous catalytic layer to the direction away from the hydrogen/oxygen generating porous catalytic layer are 2wt% and 4wt%, respectively. The porosities of the two gas impurity removal porous catalytic layers from the direction close to the hydrogen/oxygen generating porous catalytic layer to the direction away from the hydrogen/oxygen generating porous catalytic layer are 800mm³/g and 600mm³/g, respectively.

The method for producing the double-layer electrode for hydrogen production by water electrolysis in this example is basically the same as that in Example 4, excepting that after producing a single-layer catalytic layer, three hydrogen/oxygen generating porous catalytic layers and two gas impurity removal porous catalytic layers may be obtained by a simple repetition with the single-layer catalytic layer as a base, and changes of catalyst loading and porosity may be realized by adjusting production process parameters (reactant concentration, contact time, etc.).

To sum up, the double-layer electrode for hydrogen production by water electrolysis in the examples of the present disclosure has the current collector, and the hydrogen/oxygen generating porous catalytic layer is arranged close to the current collector, which may play a role in catalyzing a reaction between hydrogen and oxygen and guiding gas diffusion. The gas impurity removal porous catalytic layer is close to the hydrogen/oxygen generating porous catalytic layer (also close to the diaphragm during use), which plays a role of removing the impurity gas passing through the diaphragm. The hydrogen/oxygen generating porous catalytic layer and the gas impurity removal porous catalytic layer both adopt conductive porous carrier frameworks, which have good conductivity. The hydrogen/oxygen generating porous catalytic layer provides abundant surface active sites and gas diffusion channels, which is beneficial to eliminate gas resistance and reduce power consumption. The gas removal porous catalytic layer may ensure the purity of gas production, reduce needs for the thickness of diaphragm, use a thinner diaphragm, and reduce the resistance of diaphragm.

In the description of the present disclosure, it is to be understood that, the orientation or positional relationship indicated by terms such as "central," "longitudinal," "lateral," "length," "width," "thickness," "upper," "lower," "front," "rear," "left," "right," "vertical," "horizontal," "top," "bottom," "inner," "outer," "clockwise," "counterclockwise," "axial," "radial," and "circumferential" is based on the orientation or positional relationship shown in the accompanying drawings, which is only for the convenience of describing the present disclosure and simplifying the description, and is not intended to indicate or imply that the device or element being referred to must have a particular orientation, be constructed and operated in a particular orientation, so it cannot be construed as a limitation of the present disclosure.

In addition, terms such as "first" and "second" are used for purposes of description and are not intended to indicate or imply relative importance or significance or to imply the number of indicated technical features. Thus, the feature defined with "first" and "second" may explicitly or implicitly include at least one of these features. In the description of the present disclosure, "a plurality of' means at least two, such as two, three, etc., unless specified otherwise.

In the present disclosure, unless specified or limited otherwise, terms "installation," "interconnection," "connection," and "fixation" are used broadly, and may be, for example, fixed connections, detachable connections, or integral connections; it may be mechanical connections, electrical connections, or communicated with each other; it may be direct connections or indirect connections via an intermediary; it may also be inner communications of two elements or the interaction between two elements, unless specified otherwise. Specific meanings of the above-mentioned terms in the present disclosure may be understood by those skilled in the art according to specific situations.

In the present disclosure, unless specified or limited otherwise, a first feature is "on" or "below" a second feature may be that the first feature is in direct contact with the second feature, or the first feature and the second feature are in indirect contact through an intermediary. Furthermore, a first feature "on," "above," or "on top of' a second feature may be that the first feature is right or obliquely "on," "above," or "on top of" the second feature, or just means that the first feature is at a height higher than that of the second feature. A first feature "below," "under," or "on bottom of" a second feature may be that the first feature is right or obliquely "below," "under," or "on bottom of" the second feature, or just means that the first feature is at a height lower than that of the second feature.

In the present disclosure, terms "an embodiment," "some embodiments," "an example," "a specific example," or "some examples," mean that a particular feature, structure, material, or characteristic described in connection with the embodiment or example is included in at least one embodiment or example of the present disclosure. The schematic expressions of the above-mentioned terms throughout this specification are not necessarily referring to the same embodiment or example. Moreover, the particular features, structures, materials, or characteristics described may be combined in any suitable manner in one or more embodiments or examples. In addition, those skilled in the art may combine the different embodiments or examples and features of different embodiments or examples described in this specification without being mutually inconsistent.

Although the embodiments of the present disclosure have been shown and described above, it is to be understood that the above-mentioned embodiments are illustrative and cannot be construed as limitations of the present disclosure, and changes, modifications, substitutions and variations made to the above-mentioned embodiments by those skilled in the art are within the scope of protection of the present disclosure.

## Claims

1. A double-layer electrode for hydrogen production by water electrolysis, **characterized by** comprising:
a current collector;
wherein a surface of the current collector is provided with at least one hydrogen/oxygen generating porous catalytic layer, and the hydrogen/oxygen generating porous catalytic layer comprises a conductive porous carrier and hydrogen/oxygen generating catalyst particles dispersed on a surface of the carrier; at least one gas impurity removal porous catalytic layer is provided on a surface of an outermost hydrogen/oxygen generating porous catalytic layer, and the gas impurity removal porous catalytic layer comprises a conductive porous carrier and gas impurity removal catalyst particles dispersed on a surface of the carrier.

2. The double-layer electrode for hydrogen production by water electrolysis of claim 1, wherein when a number of hydrogen/oxygen generating porous catalytic layers is two or more, catalyst loadings and porosities of the hydrogen/oxygen generating porous catalytic layers decrease sequentially from a direction close to the current collector to a direction close to the gas impurity removal porous catalytic layer.

3. The double-layer electrode for hydrogen production by water electrolysis of claim 1, wherein when a number of gas impurity removal porous catalytic layers is two or more, catalyst loadings of the gas impurity removal porous catalytic layers increase sequentially from a direction close to the hydrogen/oxygen generating porous catalytic layer to a direction away from the hydrogen/oxygen generating porous catalytic layer, and porosities of the gas impurity removal porous catalytic layers decrease sequentially from the direction close to the hydrogen/oxygen generating porous catalytic layer to the direction away from the hydrogen/oxygen generating porous catalytic layer.

4. The double-layer electrode for hydrogen production by water electrolysis of any one of claims 1 to 3, wherein
the porosity of the gas impurity removal porous catalytic layer is lower than the porosity of the hydrogen/oxygen generating porous catalytic layer; and/or
the hydrogen/oxygen generating porous catalytic layer has a porosity ranging from 1000 to 2000mm³/g, and an average pore diameter ranging from 10 to 20 nanometers; and/or
the gas impurity removal porous catalytic layer has a porosity ranging from 500 to 1500mm³/g, and an average pore diameter ranging from 2 to 8 nanometers.

5. The double-layer electrode for hydrogen production by water electrolysis of claim 1, wherein
a surface contact angle of the gas impurity removal porous catalytic layer is 100 to 150 degrees; and/or
the current collector is flat; and/or
a catalyst loading of the hydrogen/oxygen generating porous catalytic layer is between 3 and 15wt%, and a catalyst loading of the gas impurity removal porous catalytic layer is between 1 and 8wt%.

6. The double-layer electrode for hydrogen production by water electrolysis of claim 1, wherein
the conductive porous carriers of the hydrogen/oxygen generating porous catalytic layer and the gas impurity removal porous catalytic layer are both three-dimensional graphene aerogels or conductive two-dimensional metal-organic framework MOF materials; and/or
the hydrogen/oxygen generating catalyst particles are Ni-Fe bimetallic particles, and the gas impurity removal catalyst particles are Pt-Pd nanoparticles.

7. A method for producing a double-layer electrode for hydrogen production by water electrolysis of any one of claims 1 to 6, **characterized by** comprising:
loading hydrogen/oxygen generating catalyst particles on a conductive porous carrier of a hydrogen/oxygen generating porous catalytic layer to form the hydrogen/oxygen generating porous catalytic layer;
loading gas impurity removal catalyst particles on a conductive porous carrier of a gas impurity removal porous catalytic layer to form the gas impurity removal porous catalytic layer;
assembling the hydrogen/oxygen generating porous catalytic layer, a current collector and the gas impurity removal porous catalytic layer; and/or
wherein the method further comprises preparing the conductive porous carrier of the hydrogen/oxygen generating porous catalytic layer and/or the conductive porous carrier of the gas impurity removal porous catalytic layer; and/or
wherein when a number of the hydrogen/oxygen generating porous catalytic layers or the gas impurity removal porous catalytic layers is two or more, a new hydrogen/oxygen generating porous catalytic layer or gas impurity removal porous catalytic layer is prepared by repeatedly forming a hydrogen/oxygen generating porous catalytic layer or a gas impurity removal porous catalytic layer on a previously prepared hydrogen/oxygen generating porous catalytic layer or gas impurity removal porous catalytic layer as a base.

8. A method for producing a double-layer electrode for hydrogen production by water electrolysis of any one of claims 1 to 6, **characterized by** comprising:
forming a hydrogen/oxygen generating porous catalytic layer carrier on a current collector, and loading hydrogen/oxygen generating porous catalytic layer nanoparticles on a conductive porous carrier of the hydrogen/oxygen generating porous catalytic layer carrier to obtain a hydrogen/oxygen generating porous catalytic layer - current collector complex;
forming, on the hydrogen/oxygen generating porous catalytic layer - current collector complex as a base, a conductive porous carrier of a gas impurity removal porous catalytic layer on a surface of the hydrogen/oxygen generating porous catalytic layer of the hydrogen/oxygen generating porous catalytic layer - current collector complex, and loading gas impurity removal porous catalytic layer nanoparticles on the conductive porous carrier of the gas impurity removal porous catalytic layer; and/or
wherein the method further comprises preparing the conductive porous carrier of the hydrogen/oxygen generating porous catalytic layer and/or the conductive porous carrier of the gas impurity removal porous catalytic layer; and/or
wherein when a number of the hydrogen/oxygen generating porous catalytic layers or the gas impurity removal porous catalytic layers is two or more, a new hydrogen/oxygen generating porous catalytic layer or gas impurity removal porous catalytic layer is prepared by repeatedly forming a hydrogen/oxygen generating porous catalytic layer or a gas impurity removal porous catalytic layer on a previously prepared hydrogen/oxygen generating porous catalytic layer or gas impurity removal porous catalytic layer as a base.

9. An electrolytic hydrogen production unit, **characterized by** comprising:
a diaphragm;
wherein a cathode double-layer electrode is disposed at one side of the diaphragm, and an anode double-layer electrode is disposed at the other side of the diaphragm;
wherein the cathode double-layer electrode and the anode double-layer electrode are both a double-layer electrode for hydrogen production by water electrolysis of any one of claims 1 to 6, and a gas impurity removal porous catalytic layer of the cathode double-layer electrode and a gas impurity removal porous catalytic layer of the anode double-layer electrode are both adjacent to the diaphragm.

10. A system for hydrogen production by water electrolysis, **characterized by** comprising a double-layer electrode for hydrogen production by water electrolysis of any one of claims 1 to 6.
